# EUROPÄISCHE PATENTSCHRIFT

(11) **EP 3 130 893 B1**
(45) Veröffentlichungstag und Bekanntmachung des Hinweises auf die Patenterteilung: **08.05.2019**
(21) Anmeldenummer: 16183091.4
(22) Anmeldetag: 05.08.2016
(51) Int. Cl.: G01C 21/36, G07C 5/00, B60H 1/00, G08G 1/14, H04Q 9/00, G08G 1/0967

(54) **VORRICHTUNG UND VERFAHREN ZUM BESTIMMEN EINES BESCHATTUNGSGRADS EINER PARKPOSITION FÜR EIN FAHRZEUG**
DEVICE AND METHOD FOR DETERMINING A SHADING LEVEL OF A PARKING POSITION FOR A VEHICLE
DISPOSITIF ET METHODE DE DETERMINATION DU DEGRE D'OMBRAGE D'UNE POSITION DE STATIONNEMENT POUR UN VEHICULE

(30) Priorität: 10.08.2015 DE 102015215239
(43) Veröffentlichungstag der Anmeldung: 15.02.2017
(73) Patentinhaber: Volkswagen Aktiengesellschaft, 38440 Wolfsburg (DE)
(72) Erfinder: Jördens, Christian, 38120 Braunschweig (DE)

(56) Entgegenhaltungen:
- EP-A1- 1 775 690
- DE-A1- 10 106 152
- DE-A1- 10 248 003
- DE-A1-102012 221 179
- DE-A1-102013 001 308
- KR-B1- 100 980 660
- US-A1- 2010 236 770

## Beschreibung

Die vorliegende Anmeldung betrifft Vorrichtungen, Verarbeitungseinrichtungen und Verfahren zum Bestimmen und/oder Übermitteln eines Beschattungsgrads einer Parkposition für ein Fahrzeug.

Bei hohen Außentemperaturen ist ein Abstellen eines Fahrzeuges auf einem beschatteten Parkplatz von Vorteil. Eine starke Sonneneinstrahlung führt zu einer unerwünschten Aufheizung des Fahrzeuginnenraums, daher sind Schattenparkplätze begehrt. In manchen Fahrzeugen ist eine Standlüftung im Fahrzeug verbaut, die jedoch eine bestimmte Zeit benötigt bis sie die Innenraumtemperatur entsprechend verringert hat. Darüber hinaus ist es im Allgemeinen notwendig, dass der Fahrer die Standlüftung rechtzeitig vor Fahrtantritt aktiviert.

In anderen Situationen können auch Sonnenparkplätze begehrt sein, beispielsweise im Winter, da dann das Fahrzeug beim Einsteigen nicht so kalt ist und auch beispielsweise vereiste Fahrzeugscheiben je nach Sonneneinstrahlung und Außentemperatur von selbst abtauen können.

Die DE 101 06 152 A1 betrifft eine Steuerung einer Standlüftung bei einem Kraftfahrzeug für die Absenkung einer Innentemperatur mit einem Steuergerät für die Standlüftung und wenigstens einen Zeitgeber, wobei die Standlüftung für eine vorgegebene Dauer eingeschaltet wird, wenn die Innentemperatur einen vorgegebenen Grenzwert übersteigt.

Die DE 10 2007 056 770 A1 betrifft ein Belüftungs- und/oder Klimatisierungssystem für ein Fahrzeug mit einem Gebläse für eine Luftansaugung von Außenluft aus der Umgebung des Fahrzeugs, sowie ein Verfahren zur Steuerung oder Regelung des Belüftungs- und/oder Klimatisierungssystems.

Die DE 10 2011 084 090 A1 offenbart eine Vorrichtung zum Verbinden eines Kraftfahrzeugs, das eine vorgegebene Identifizierung aufweist, mit einem Datennetzwerk. Die Vorrichtung umfasst dabei eine Verbindungseinheit, um eine verschlüsselte Datenverbindung mit dem Kraftfahrzeug herzustellen, die dazu ausgebildet ist, die vorgegebene Identifizierung zu empfangen. Die Vorrichtung umfasst weiter eine Speichereinheit, in der mindestens eine Vergleichs-Identifizierung gespeichert ist, und eine weitere Verbindungseinheit, zum Herstellen einer weiteren Datenverbindung mit dem Datennetzwerk. Darüber hinaus umfasst die Steuervorrichtung eine Steuereinheit, die ausgebildet ist, das Kraftfahrzeug über die Verbindungseinheit und die weitere Verbindungseinheit mit dem Datennetzwerk zu verbinden, wenn die empfangene vorgegebene Identifizierung des Kraftfahrzeugs mit einer gespeicherten Vergleichs-Identifizierung übereinstimmt.

Die DE 10 2008 015 232 A1 offenbart eine Kommunikationseinrichtung für ein Fahrzeug zur Kommunikation mit einer Zentrale, wobei die Kommunikationseinrichtung eine Positionsbestimmungseinheit zur Bestimmung einer Position des Fahrzeugs aufweist. Die Kommunikationseinrichtung umfasst weiter eine Kommunikationseinheit zum Aufbau und Halten einer Kommunikationsverbindung zu der Zentrale und zum Senden der ersten Informationsdaten mittels der Kommunikationsverbindung an die Zentrale, wobei die Kommunikationsverbindung auf einem zellulären Kommunikationsnetz basiert und wobei die ersten Informationsdaten Daten über die Position des Fahrzeugs enthalten.

Die DE 10 2010 054 081 A1 betrifft ein Verfahren sowie eine Vorrichtung zur Erzeugung von Einparkhinweisen für den Fahrer eines Fahrzeuges, insbesondere eines Kraftfahrzeuges. Der Sonnenstand und die Orientierung des Fahrzeugs werden ermittelt. Ferner wird mittels der Sonnenstandsinformation und der ermittelten Orientierung des Fahrzeugs eine sich durch einen minimalen Wärmeeintrag durch die Sonneneinstrahlung in das Fahrzeug auszeichnende Parkposition für das Fahrzeug ermittelt und schließlich wird die eine ermittelte Parkposition für das Fahrzeug dem Fahrer angezeigt.

Die in der Druckschrift DE 10 2010 054 081 A1 zitierte Druckschrift DE 10 2009 022 280 A1 betrifft insbesondere ein Verfahren und eine Vorrichtung zum Betrieb eines Fahrzeuges, wobei das Fahrzeug zumindest eine Photovoltaikzelle aufweist, wobei Mittel vorgesehen sind, anhand welcher einem Fahrzeugführer wenigstens bei aktivierter Routenführung mindestens ein Hinweis für eine Fahrstrecke und/oder Parkmöglichkeit mit einer maximalen Sonneneinstrahlung ausgegeben werden bzw. wird.

Die DE 102 48 003 A1 betrifft einen automatischen Sonnenschutz für Fahrzeuge mit motorisch angetriebenen Abschattmitteln zum Abdecken wenigstens einer lichtdurchlässigen Fahrzeugkarosseriefläche eines geparkten oder abgestellten Fahrzeugs mit Steuerungsmitteln, welche in Abhängigkeit von wenigstens einem Temperaturwert, der durch einen an dem Fahrzeug vorgesehenen Temperatursensor erfassbar ist, den motorischen Antrieb der Abschattmittel aktivieren.

Die US 2013/0151088 A1 betrifft ein Verfahren und System zum Sammeln von Fahrzeugdaten, welche den Verkehr betreffen. Ein Fahrzeug umfasst mehrere Sensoren, um eine Fahrzeugleistungs- und eine Ortsinformation zu erfassen, und ein Datensammelmodul, um die Fahrzeugleistungs- und die Ortsinformation zu sammeln und einem entfernten Knoten bereitzustellen, damit dieser die Leistungs- und Ortsinformation anderen Fahrzeugen bereitstellt.

Die DE 10 2014 201 195 A1 betrifft einen autonomen Fahrzeugbetrieb während einer Parkphase, um während der Parkphase durch Betreiben von zumindest einer Kraftfahrzeugkomponente zumindest einen Betriebsparameter des Kraftfahrzeugs gemäß einer Benutzervorgabe einzustellen. Eine Steuereinheit empfängt Zustandsdaten betreffend zumindest eine während der Parkphase auf den zumindest einen Betriebsparameter einwirkende Umfeldgröße und betreffend einen jeweiligen Zustand der mindestens einen Fahrzeugkomponente und legt abhängig von den Zuständen für den Verbrennungsmotor zumindest einen Startzeitpunkt oder zumindest eine Laufdauer fest. Dabei können beispielsweise über eine Empfangseinrichtung empfangene Wettervorhersagedaten aus dem Internet betreffend einen zukünftigen Verlauf der Außentemperatur und eine Sonneneinstrahlung berücksichtigt werden.

Die DE 10 2014 001 554 A1 betrifft ein Verfahren zum automatischen Parken eines Fahrzeugs auf einer eine Vielzahl von Parkplätzen aufweisenden Parkfläche. Durch eine Steuerungseinrichtung wird ein bestimmter Parkplatz zugewiesen. Ferner wird eine Umweltinformation zur Verfügung gestellt und anhand der Umweltinformation werden die Parkplätze bewertet. Gegebenenfalls wird ein auf einem als suboptimal bewerteten Parkplatz befindliches Fahrzeug auf einen als optimal bewerteten Parkplatz durch die Steuerungseinrichtung umgeparkt. Ein Parkplatz kann als suboptimal bewertet werden, wenn die Sonneneinstrahlung so stark ist, dass sie eine Aufheizung bewirkt, die einen festgelegten Grenzwert für die Fahrzeuginnentemperatur übersteigt.

Die DE 10 2013 001308 A1 betrifft ein Verfahren zum Bereitstellen von Informationen über einen Parkplatz, insbesondere um über einen oder mehrere Parkplätze jeweils verlässliche Informationen zu übermitteln und einem Fahrer eines Fahrzeugs bereitzustellen. Durch eine Erfassungseinrichtung werden hierzu Merkmalsdaten eines Parkplatzes erfasst, welche einen Umwelteinfluss beschreiben, der auf ein erstes, auf dem Parkplatz geparktes Fahrzeug eingewirkt hat, und/oder welche ein Ereignis beschreiben, das sich an dem Parkplatz ereignet hat und/oder welche eine geographische Lage des Parkplatzes beschreiben. Die Merkmalsdaten werden durch eine fahrzeugexterne Informationseinrichtung gespeichert. Später werden die Merkmalsdaten durch die Informationseinrichtung an eine Navigationsvorrichtung übertragen, mittels welcher ein Fahrer eines zweiten Fahrzeugs einen Parkplatz für das zweite Fahrzeug sucht.

Die US 2010/236770 A1 betrifft Systeme und Verfahren zum Betreiben eines Heiz-, Belüftungs- und Klimatisierungs- (HVAC) Systems für ein Fahrzeug. Während eines ersten Zustandes, in welchem der Motor läuft, wird das HVAC System betrieben, um einen von einem Insassen angeforderten Pegel eines thermischen Komforts bereitzustellen. Während eines zweiten Zustandes, in welchem das Fahrzeug ausgeschaltet ist und eine Fahrzeugtür oder ein Fenster in einem geschlossenen oder verriegelten Zustand ist, wird der Betrieb des HVAC Systems beibehalten, um den von dem Insassen angeforderten Pegel eines thermischen Komforts bereitzustellen. Während eines Dritten Zustandes, in welchem das Fahrzeug ausgeschaltet ist und eine Fahrzeugtür oder ein Fenster in einem offenen oder in einer unverriegelten Position ist, wird der Betrieb des HVAC Systems nicht fortgesetzt.

DE 10 2012 221179 A1 betrifft ein Verfahren und eine korrespondierende Vorrichtung zum Betreiben eines Fahrzeugs, bei dem Kartendaten mit topografischen Informationen bereitgestellt werden. Außerdem werden eine Uhrzeit und ein Datum bereitgestellt. Abhängig von den Kartendaten, der Uhrzeit und dem Datum wird für einen vorgegebenen Bereich ein Schattenstand ermittelt.

Die EP 1 775 690 A1 betrifft ein Verfahren zum Navigieren eines Fahrzeugs zu einem Parkplatz in einem Zielbereich, welcher ein Ziel umgibt. Bei dem Verfahren werden Parkdaten für den Zielbereich empfangen und ein Parkbereich innerhalb des Zielbereichs aus den Parkdaten basierend auf zumindest einem Parkstrategieparameter bestimmt. Navigationsinformation wird einem Fahrer des Fahrzeugs zum Führen des Fahrzeugs zu dem Parkbereich bereitgestellt. Ein Verkehrsinformationsparameter für den Zielbereich wird bestimmt und basierend auf dem Verkehrsinformationsparameter wird zumindest ein Parkstrategieparameter zum Bestimmen des Parkbereichs bestimmt.

Die KR 100 980 660 B1 betrifft ein Parkführungsverfahren und ein Fahrzeugsteuersystem, um die richtige Temperatur in einem Fahrzeug aufrechtzuerhalten, indem ein Parkort basierend auf der Wetterinformation des aktuellen Standorts eines Fahrzeugs gefunden wird. Eine GPS (Global Positioning System) -Empfangseinheit empfängt ein GPS-Signal. Eine Speichereinheit speichert strukturelle Information einschließlich Parkrauminformation. Ein Sonnenlichtsensor misst eine Intensität oder eine Strahlungsrichtung der Sonne oder mehr. Eine Steuereinheit extrahiert die gegenwärtigen Ortsinformationen eines Fahrzeugs von der GPS-Empfangseinheit. Eine Steuereinheit empfiehlt aufgrund der Strukturinformationen und der absoluten Sonnenposition einen Parkplatz.

Beschattete Parkplätze, die dem Fahrer aus eigener Erfahrung bekannt sind, können gemäß den obigen Druckschriften vom Fahrer angesteuert werden. Dabei ist jedoch die Kenntnis über die entsprechenden Orte auf die Information vom Fahrer selbst beschränkt.

Es ist daher eine Aufgabe der vorliegenden Anmeldung, eine Vorrichtung bereitzustellen, die es ermöglichen, einen Beschattungsgrad einer Parkposition für ein Fahrzeug zu bestimmen und diese Information zur Verfügung zu stellen.

Diese Aufgabe wird gemäß der vorliegenden Erfindung durch eine Vorrichtung nach Anspruch 1 gelöst. Die Unteransprüche definieren weitere Ausführungsbeispiele der vorliegenden Erfindung. Die erfindungsgemäße Vorrichtung zum Bestimmen eines Beschattungsgrads einer Parkposition für ein Fahrzeug umfasst eine Sensoreinrichtung, wobei die Sensoreinrichtung eingerichtet ist, eine Außentemperatur und eine Innenraumtemperatur des Fahrzeugs zu bestimmen. Die Vorrichtung ist dadurch gekennzeichnet, dass sie weiter eine Auswerteeinrichtung umfasst, wobei die Auswerteeinrichtung eingerichtet ist, basierend auf der Außentemperatur und der Innenraumtemperatur den Beschattungsgrad der Parkposition zu bestimmen. Die Vorrichtung umfasst ferner eine Sendeeinrichtung, wobei die Sendeeinrichtung eingerichtet ist, Informationen über den Beschattungsgrad der Parkposition des Fahrzeugs an eine externe Einrichtung zu senden.

Der Beschattungsgrad kann beispielsweise angeben, dass es sich um eine beschattete Parkposition (Schattenparkplatz) handelt, oder dass es sich um eine besonnte Parkposition (Sonnenparkplatz) handelt.

Die automatische Bestimmung eines Beschattungsgrads einer Parkposition und das Senden der Information an eine Verarbeitungseinrichtung, zum Beispiel über einen Online-Dienst, die wiederum die Information an ein anderes Fahrzeug oder andere Fahrzeuge übermitteln kann, stellt für einen Fahrer einen hohen Komfort dar. Er kann damit informiert werden, wo sich aktuell, in seiner näheren Umgebung ein Schattenparkplatz oder ein Sonnenparkplatz befindet. Diese Information steht ihm erfindungsgemäß, jederzeit zur Verfügung, vor allem auch dann wenn der Fahrer sich in einer Umgebung befindet, die ihm nicht vertraut ist, wie beispielsweise in einer fremden Stadt, da dort sein Erfahrungswissen über beschattete oder sonnige Parkplätze begrenzt oder nicht vorhanden ist.

Darüber hinaus sind Außentemperatursensoren serienmäßig in Fahrzeugen verbaut, und Innenraumtemperatursensoren standardmäßig in Fahrzeugen mit einer geregelten Klimaanlage integriert. Zur Bestimmung einer Beschattung einer Parkposition, die auf den Temperaturwerten dieser Sensoren beruht, müssen daher keine neuen oder zusätzlichen Komponenten installiert werden.

Die Vorrichtung umfasst weiter eine Empfangseinrichtung, wobei die Empfangseinrichtung eingerichtet ist, Informationen über einen weiteren Beschattungsgrad einer weiteren Parkposition des Fahrzeugs von der Verarbeitungseinrichtung zu empfangen. Die Vorrichtung umfasst weiter eine Ausgabeeinrichtung, wobei die Ausgabeeinrichtung eingerichtet ist, Informationen über den weiteren Beschattungsgrad der weiteren Parkposition des Fahrzeugs an einen Fahrer des Fahrzeugs auszugeben.

Eine im Fahrzeug integrierte Empfangseinrichtung kann von der Verarbeitungseinrichtung somit Informationen über einen Beschattungsgrad einer Parkposition empfangen und dem Fahrer die Position eines gewünschten Parkplatzes, z.B. eines Schattenparkplatzes oder eines Sonnenparkplatzes jederzeit mitteilen.

Diese Informationen werden z.B. von anderen Fahrzeugen, die sich beispielsweise auf einem beschatteten Parkplatz befinden oder sich zu einem anderen Zeitpunkt dort befunden haben, z.B. wie oben beschriebenen bestimmt und an die Verarbeitungseinrichtung übermittelt, wobei diese wiederum über einen Online-Dienst die Information an eine integrierte Empfangseinheit eines anderen Fahrzeugs übermitteln kann und damit den Fahrer über die Position des beschatteten Parkplatzes informiert.

Eine automatisierte Bereitstellung der Informationen über beschattete und/oder sonnige Parkpositionen über beispielsweise ein Backend oder WLAN bietet als Online-Dienst für einen Fahrer einen Wissensvorteil gegenüber Fahrern, deren Fahrzeuge nicht über diese Technologie verfügen. Diese Informationsbasis ist jedem Erfahrungswissen deutlich überlegen und prinzipiell in jeder Stadt verfügbar, in der Fahrzeuge fahren, die die erfindungsgemäße Vorrichtung integriert haben.

Aufgrund der Kommunikation zwischen Fahrzeug und Verarbeitungseinrichtung und der Sammlung von Informationen von verschiedenen Fahrzeugen, die sich beispielsweise auf der beschatteten oder sonnigen Parkposition befunden haben, wird eine aktualisierte Informationsweitergabe über die Position einer beschatteten oder sonnigen Parkposition für den Fahrer zu jeder Zeit gewährleistet.

Bei einem Ausführungsbeispiel ist die Auswerteeinrichtung eingerichtet, eine Temperaturdifferenz zwischen Außentemperatur und Innenraumtemperatur zu bestimmen und den Beschattungsgrad in Abhängigkeit von einem Vergleich der Temperaturdifferenz mit mindestens einem Schwellenwert zu bestimmen. Somit kann auf einfache Weise der Beschattungsgrad bestimmt werden.

Beispielsweise kann als Beschattungsgrad bestimmt werden, dass sich das Fahrzeug in einer beschatteten Parkposition befindet, wenn die Temperaturdifferenz kleiner als ein erster Schwellenwert des mindestens einen Schwellenwertes ist, und/oder es kann bestimmt werden, dass sich das Fahrzeug in einer sonnigen Parkposition befindet, wenn die Temperaturdifferenz größer als ein zweiter Schwellenwert des mindestens einen Schwellenwertes ist. Der erste Schwellenwert kann gleich dem zweiten Schwellenwert sein, kann aber auch von diesem verschieden sein. Der Schwellenwert kann beispielsweise im Bereich von 0 - 20 Kelvin (K) liegen, beispielsweise ≤ 1 K, 3 K, 5 K, 8 K, 10 K, 15 K oder 20 K sein, wobei diese Werte lediglich als Beispiel zu verstehen sind und je nach Anwendung variieren können. Somit ist durch einen einfachen Schwellenwertvergleich eine Unterscheidung zwischen Schattenparkplätzen und Sonnenparkplätzen möglich.

Zusätzlich oder alternativ kann bei manchen Ausführungsbeispielen die Auswerteeinrichtung eingerichtet sein, den Beschattungsgrad basierend auf einer Änderung der Innentemperatur über der Zeit und/oder basierend auf einer Änderung der Außentemperatur über der Zeit zu bestimmen. Auf diese Weise kann beispielsweise eine Genauigkeit der Bestimmung, ob es sich um einen Schattenparkplatz oder einen Sonnenparkplatz handelt, verbessert werden.

Beispielsweise kann als Beschattungsgrad bestimmt werden, dass sich das Fahrzeug in einer beschatteten Parkposition bestimmt, wenn die Innenraumtemperatur in gleicher Weise wie die Außentemperatur steigt oder die Innentemperatur verglichen mit der Außentemperatur leicht verzögert, beispielsweise mit einer Verzögerung kleiner als ein Verzögerungsschwellenwert, steigt. Dies kann beispielweise einen typischen Anstieg der Temperatur auf einem Schattenparkplatz nach einer kühlen Nacht widerspiegeln, wobei die Verzögerung der Innenraumtemperatur gegenüber der Außentemperatur beispielweise von einer Isolation des Fahrzeugs bestimmt werden kann. Ein geeigneter Verzögerungsschwellenwert kann hier beispielsweise durch Messungen bestimmt werden.

Es kann auch festgestellt werden, dass es sich um eine beschattete Parkposition handelt, wenn die Innenraumtemperatur näherungsweise konstant bleibt oder nur langsam (beispielsweise mit einer Rate kleiner als ein Ratenschwellenwert) fällt, wobei hier auch eine positive Temperaturdifferenz zu der Außentemperatur vorliegen kann, d.h. die Innenraumtemperatur größer als die Außentemperatur sein kann. Eine derartige Situation kann beispielsweise auftreten, wenn das Fahrzeug vorher auf einem besonnten Parkplatz stand und dann auf einem Schattenparkplatz abgestellt wird.

Zudem oder alternativ kann als Beschattungsgrad festgestellt werden, dass sich das Fahrzeug in einer besonnten Parkposition befindet, wenn die Innenraumtemperatur stärker über der Zeit ansteigt als die Außentemperatur. Eine derartige Situation kann z.B. auftreten, wenn ein von der Nacht abgekühltes Fahrzeug sich in der Sonne aufwärmt oder ein klimatisiertes Fahrzeug nach einer Fahrt in der Sonne abgestellt wird.

Somit können durch die Auswertung des Verlaufs der Innenraumtemperatur über der Zeit oder Außentemperatur über der Zeit verschiedene Situationen erkannt werden.

Gemäß einer Ausführungsform kann die Sensoreinrichtung einen Helligkeitssensor umfassen, wobei die Auswerteeinrichtung eingerichtet ist, den Beschattungsgrad der Parkposition in Abhängigkeit von einem Helligkeitswert des Helligkeitssensors zu bestimmen.

Mit Hilfe eines Helligkeitssensors lässt sich abschätzen, ob die Sonne scheint, wodurch abgleitet werden kann, ob eine Unterscheidung zwischen direkter Sonneneinstrahlung und Schattenparkplatz sinnvoll ist.

Zudem kann mittels des Helligkeitssensors beispielsweise festgestellt werden, ob eine Frontscheibe oder andere Scheibe des Fahrzeugs mit einer Isolierfolie oder einem anderen Material abgedeckt wird, was zu einem verringerten Aufheizen des Fahrzeuginnenraumes und somit zu einem verringerten Anstieg der Innenraumtemperatur führt. Dieser Effekt kann dann bei der Auswertung berücksichtigt werden, um so den Beschattungsgrad genauer zu bestimmen.

Ein Helligkeitssensor ist darüber hinaus standardmäßig in heutigen Fahrzeugen verbaut, wodurch keine neue Komponente installiert werden muss. Die Ausgabewerte dieses Helligkeitssensors können zudem mit gängiger Fahrzeugsoftware ausgegeben und zur Weiterverwendung zur Verfügung gestellt werden. Dadurch sind keine Softwareänderungen notwendig.

Zudem kann die Auswerteeinrichtung eingerichtet sein, zu bestimmen, ob sich das Fahrzeug in einem geparkten Zustand befindet, und nur dann den Beschattungsgrad zu bestimmen, wenn sich das Fahrzeug in einem geparkten Zustand befindet. Dieses Bestimmen kann beispielsweise auf Basis von Daten eines GPS-Sensors (beispielsweise indem festgestellt wird, ob sich das Fahrzeug für eine vorgegebene Zeitdauer am gleichen Ort befindet) und/oder auf Basis von Daten eines Geschwindigkeitssensors (beispielsweise indem festgestellt wird, dass die Geschwindigkeit mindestens für eine vorgegebene Zeitdauer 0 ist) und/oder auf Basis von Informationen über eine Zündung des Fahrzeugs bestimmt werden. Auf diese Weise kann zuverlässig festgestellt werden, ob das Fahrzeug überhaupt geparkt ist.

Gemäß einer Ausführungsform kann die Auswerteeinrichtung eingerichtet sein, Informationen über den Beschattungsgrad der Parkposition mit Wetterdaten abzugleichen.

Ein Abgleich der Daten, die Informationen über eine beschattete oder eine sonnige Parkposition umfassen, mit Wetterdaten, stellt sicher, dass die Daten nur dann ermittelt werden, wenn an dem entsprechenden Ort zu einer bestimmten Zeit mit einer Sonneneinstrahlung zu rechnen ist. Findet der Abgleich explizit durch die Auswerteeinrichtung des Fahrzeugs statt, kann nach Abruf der Wetterdaten, das Fahrzeug selbst feststellen, ob eine Bestimmung einer Beschattung sinnvoll ist oder darauf verzichtet werden muss.

Gemäß einer Ausführungsform kann die Auswerteeinrichtung eingerichtet sein, einen Ort der Parkposition zu bestimmen, und die Sendeeinrichtung kann eingerichtet sein, den Ort der Parkposition insbesondere zusammen mit dem Beschattungsgrad an die Verarbeitungseinrichtung zu senden. Somit können ortsbezogene Informationen über den Beschattungsgrad in der Verarbeitungseinrichtung gespeichert werden. Die Bestimmung des Ortes der Parkposition kann beispielsweise auf Basis von GPS-Daten, wie sie durch Navigationssysteme häufig ohnehin ermittelt werden, oder auch auf Basis von mittels einer Kamera ermittelten visuellen Daten des Parkplatzes erfolgen.

Die visuelle Lokalisierung einer Parkposition ist eine alternative Methode zu einer Lokalisierung, die auf GPS beruht. GPS ist in Schattenbereichen bei einer schlechten Sichtverbindung zum Himmel eingeschränkt. Die visuelle Lokalisierung bietet eine zusätzliche Möglichkeit eine Parkposition zu bestimmen, wenn eine GPS Lokalisierung nicht möglich ist.

Gemäß einer Ausführungsform kann die Auswerteeinrichtung eingerichtet sein, Informationen über den Beschattungsgrad der Parkposition mit einer zeitlichen Information abzugleichen, wobei die zeitliche Information eine Tageszeit und/oder eine Jahreszeit umfassen kann.

Die Tageszeit hat Einfluss auf den Sonnenstand, dementsprechend kann eine Parkposition zum Beispiel am Vormittag ein Sonnenparkplatz und am Nachmittag ein Schattenparkplatz sein. Die Jahreszeit hat beispielsweise Einfluss auf den Belaubungszustand der Bäume, dementsprechend kann die Parkposition im Sommer ein Schattenparkplatz und im Herbst ein Sonnenparkplatz sein.

Demnach kann also bei einer Bestimmung eines Beschattungsgrads der Parkposition die Tageszeit und die Jahreszeit berücksichtigt werden, was die Bestimmung des Beschattungsgrads der Parkposition optimiert.

Die erfindungsgemäße Sensoreinrichtung ist weiter eingerichtet, festzustellen, ob eine Tür und/oder ein Fenster und/oder eine Klappe des Fahrzeugs geöffnet oder geschlossen ist.

Eine Feststellung ob Türen und/oder Fenster und/oder Klappen des Fahrzeugs geöffnet oder geschlossen sind kann zusätzliche Informationen über die Innenraumtemperatur des Fahrzeugs liefern.

Der Beschattungsgrad der Parkposition wird erfindungsgemäß, in Abhängigkeit davon, ob eine Tür und/oder ein Fenster und/oder eine Klappe des Fahrzeugs geöffnet oder geschlossen ist, bestimmt. Geöffnete oder geschlossene Türen und/oder Fenster und/oder Klappen des Fahrzeugs können Einfluss auf die gemessene Innenraumtemperatur des Fahrzeugs haben. Sie können unter Umständen ein Absenken der Innenraumtemperatur zur Folge haben und damit Einfluss auf die Klassifizierung von Schattenparkplätzen.

Gemäß einer Ausführungsform kann die Auswerteeinrichtung eingerichtet sein, den Beschattungsgrad der Parkposition in Abhängigkeit von einer Ausrichtung des Fahrzeugs in der Parkposition zu einem Sonnenstand bei der Parkposition zu bestimmen.

Eine Auswertung der Ausrichtung des Fahrzeugs zum Sonnenstand, durch Auslesen des beispielsweise verbauten Kompass eines Navigationssystems und Berücksichtigen des tageszeitabhängigen Sonnenstands, ermöglicht eine optimierte Bestimmung des Beschattungsgrad einer Parkposition, da sich das Fahrzeug beispielsweise stärker aufheizt, wenn die Frontscheibe beispielsweise direkt in Richtung der Sonneneinstrahlung ausgerichtet ist.

Gemäß einem Ausführungsbeispiel kann die Auswerteeinrichtung eingerichtet sein, den Beschattungsgrad nach einer vorgegebenen Mindestparkzeit und/oder wiederholt zu bestimmen. Hierdurch kann eine Genauigkeit der Bestimmung erhöht werden, da nach einer Mindestparkzeit oder bei einer späteren Wiederholung der Bestimmung ein Einfluss einer vorherigen Bewegung des Fahrzeugs (beispielsweise Fahrt durch besonnte Bereiche, Fahrt durch beschattete Bereiche etc.) auf die Bestimmung des Beschattungsgrades geringer ist und somit eine genauere Bestimmung möglich ist.

Eine Verarbeitungseinrichtung, zum Beispiel eine Serveranordnung, zum Senden und Empfangen von Informationen von Fahrzeugen kann eine Empfangseinrichtung umfassen, wobei die Empfangseinrichtung eingerichtet ist, erste Informationen über einen Beschattungsgrad einer Parkpositionen von einer Vielzahl von Fahrzeugen zu empfangen. Die Verarbeitungseinrichtung kann weiter einen Datenspeicher zum Speichern von Daten auf Basis der empfangenen ersten Informationen umfassen, wobei die Empfangseinrichtung weiter eingerichtet ist, eine Anforderung des Beschattungsgrads der Parkposition von einem Fahrzeug zu empfangen. Die Verarbeitungseinrichtung kann weiter eine Sendeeinrichtung umfassen, wobei die Sendeeinrichtung eingerichtet ist, zweite Informationen über den Beschattungsgrad der Parkposition in Antwort auf die Anforderung auf Basis der gespeicherten Daten an das Fahrzeug zu senden.

Die Information über einen Beschattungsgrad einer Parkposition kann erfindungsgemäß von einer Vielzahl von Fahrzeugen bereitgestellt werden, das heißt zum Beispiel von Fahrzeugen, die sich zu einem anderen Zeitpunkt auf dieser Parkposition befunden haben.

Das heißt bei Randbedingungen, wie zum Beispiel schattenspendende Bäume oder Gebäude, die sich über einen bestimmten Zeitraum nicht ändern, das heißt die auf einer Zeitskala von Wochen konstant sind, können die Daten, das heißt die Informationen über den Beschattungsgrad der Parkposition über mehrere Fahrzeuge, die an derselben Stelle parken, qualitativ verbessert werden.

Das Speichern von Daten auf Basis der empfangenen Informationen über den Beschattungsgrad der Parkposition ermöglicht beispielsweise die Erstellung einer Karte, die eine Vielzahl von beschatteten und/oder sonnigen Parkpositionen in Abhängigkeit von der Zeit aufweist, die von einem Fahrer eines anderen Fahrzeugs aus dem Datenspeicher abgerufen werden können und ihm damit zuverlässig jederzeit zur Verfügung stehen. Die Sendeeinrichtung übermittelt dann, basierend auf einer Anforderung, dem Fahrer die gewünschten Informationen, das heißt dem Fahrer ist freigestellt, wann und welche Informationen er anfordern möchte.

Die Verarbeitungseinrichtung kann eingerichtet sein, die ersten Informationen über einen Beschattungsgrad der Parkposition mit Wetterdaten abzugleichen. Die Verarbeitungseinrichtung, kann aktuelle Wetterdaten ermitteln, zum Beispiel die Wetterdaten von einem Wetterdienst direkt anfordern und diese zum Beispiel über einen Online-Dienst einem Fahrer eines Fahrzeugs zur Verfügung stellen. Der Fahrer kann die entsprechenden Daten beliebig anfordern und abrufen.

Ein Verfahren zum Senden und Empfangen von Informationen von Fahrzeugen kann ein Empfangen von Informationen über einen Beschattungsgrad von Parkpositionen von einer Vielzahl von Fahrzeugen umfassen. Das Verfahren kann weiter ein Speichern von Daten auf Basis der empfangenen Informationen mittels eines Datenspeichers umfassen, wobei eine Anforderung eines Beschattungsgrad einer Parkposition von einem Fahrzeug von der Empfangseinrichtung empfangen werden kann. Das Verfahren kann weiter ein Senden von zweiten Informationen über einen Beschattungsgrad einer Parkposition umfassen, in Antwort auf die Anforderung auf Basis der gespeicherten Daten an das Fahrzeug.

Das Verfahren zum Senden und Empfangen von Informationen von Fahrzeugen weist dieselben Vorteile auf, wie die bereits diskutierten Vorteile der Verarbeitungseinrichtung für ein Fahrzeug.

Das Verfahren zum Bestimmen eines Beschattungsgrads einer Parkposition für ein Fahrzeug kann ein Bestimmen einer Außentemperatur und einer Innenraumtemperatur des Fahrzeugs umfassen. Das Verfahren kann weiter ein Bestimmen umfassen, ob sich das Fahrzeug in einer beschatteten oder einer sonnigen Parkposition befindet, basierend auf der Außentemperatur und der Innenraumtemperatur. Das Verfahren kann ferner ein Senden von Informationen über die beschattete oder die sonnige Parkposition des Fahrzeugs an eine Verarbeitungseinrichtung umfassen.

Das Verfahren zum Bestimmen einer Beschattung einer Parkposition für ein Fahrzeug weist dieselben Vorteile auf, wie die bereits diskutierten Vorteile der Vorrichtung für ein Fahrzeug.

Das Verfahren kann Empfangen von weiteren Informationen über einen Beschattungsgrad einer Parkposition des Fahrzeugs von der Verarbeitungseinrichtung umfassen. Das Verfahren kann weiter ein Ausgeben der weiteren Informationen über den Beschattungsgrad der Parkposition des Fahrzeugs umfassen.

Das Verfahren weist dieselben Vorteile auf, wie die bereits diskutierten Vorteile der Vorrichtung.

Das Verfahren zum Bestimmen, ob sich das Fahrzeug in einer beschatteten oder einer sonnigen Parkposition befindet, kann weiter umfassen: ein Bestimmen einer Temperaturdifferenz zwischen Außentemperatur und Innenraumtemperatur, und ein Bestimmen, dass sich das Fahrzeug in einer beschatteten oder einer sonnigen Parkposition befindet, wenn die Temperaturdifferenz kleiner oder größer als ein Schwellenwert ist.

Das Verfahren zum Bestimmen, ob sich das Fahrzeug in einer beschatteten oder einer sonnigen Parkposition befindet, weist dieselben Vorteile auf, wie die bereits diskutierten Vorteile der Vorrichtung.

Das Verfahren zum Bestimmen, ob sich das Fahrzeug in einer beschatteten oder einer sonnigen Parkposition befindet, kann in Abhängigkeit von einem Helligkeitswert eines Helligkeitssensors erfolgen.

Das Verfahren zum Bestimmen, ob sich das Fahrzeug in einer beschatteten oder sonnigen Parkposition befindet, weist dieselben Vorteile auf, wie die bereits diskutierten Vorteile der Vorrichtung.

Merkmale und Elemente, welche oben bezüglich der Vorrichtungen diskutiert wurden, können auch auf das Verfahren angewendet werden.

Das das Verfahren zum Bestimmen, ob sich das Fahrzeug in einer beschatteten oder sonnigen Parkposition befindet, kann in Abhängigkeit von einem Geschwindigkeitswert des Geschwindigkeitssensors erfolgen.

Das Verfahren zum Bestimmen, ob sich das Fahrzeug in einer beschatteten oder sonnigen Parkposition befindet, weist dieselben Vorteile auf, wie die bereits diskutierten Vorteile der Vorrichtung.

Die vorliegende Erfindung wird nachfolgend unter Bezugnahme auf die beigefügten Zeichnungen im Detail beschrieben.
- FIG. 1: zeigt eine schematische Darstellung einer Vorrichtung gemäß einer Ausführungsform der vorliegenden Erfindung, und einer Verarbeitungseinrichtung, die nicht Teil der Erfindung ist.
- FIG. 2: zeigt Verfahrensschritte eines Verfahrens, das nicht Teil der Erfindung ist.

- FIG. 3: zeigt Verfahrensschritte eines Verfahrens, das nicht Teil der Erfindung ist.

Nachfolgend werden Ausführungsbeispiele der vorliegenden Erfindung unter Bezugnahme auf die beigefügten Zeichnungen detailliert erläutert. Diese Ausführungsbeispiele stellen nur Beispiele dar und sind nicht als einschränkend auszulegen. Während beispielsweise die Ausführungsbeispiele derart beschrieben werden, dass sie eine Vielzahl von Merkmalen und Elementen umfassen, so können einige dieser Merkmale in anderen Ausführungsbeispielen weggelassen und/oder durch alternative Merkmale oder Elemente ersetzt werden. In anderen Ausführungsbeispielen können zusätzliche oder alternativ zusätzliche Merkmale oder Elemente neben den explizit beschriebenen bereitgestellt werden. Es können Varianten oder Modifikationen, die sich auf ein oder mehrere Ausführungsbeispiele beziehen, auch auf andere Ausführungsbeispiele angewandt werden, sofern nichts anderes angegeben ist.

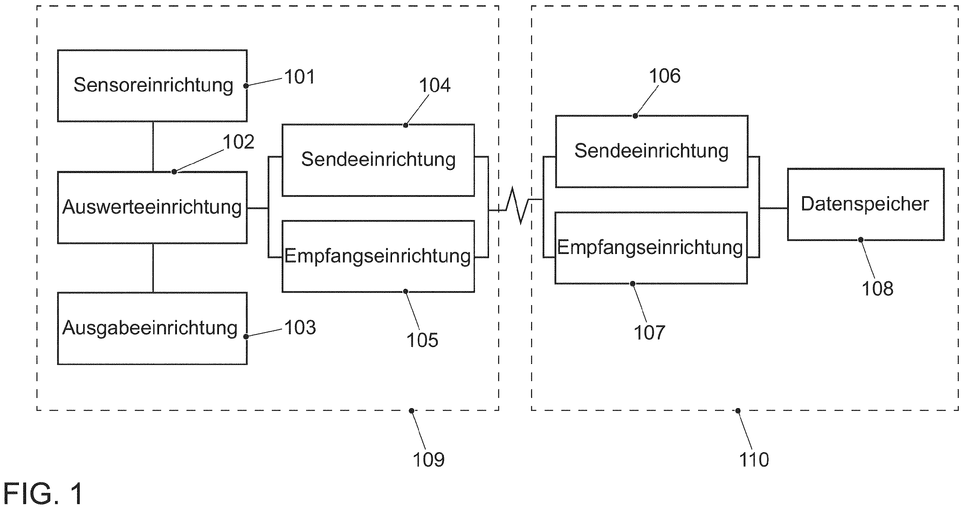

FIG. 1 zeigt eine Vorrichtung 109 zum Bestimmen eines Beschattungsgrads einer Parkposition für ein Fahrzeug. Die Vorrichtung 109 umfasst eine Sensoreinrichtung 101, eine Auswerteeinrichtung 102 und eine Ausgabeeinrichtung 103.

Die erfindungsgemäße Vorrichtung 109 ist dabei in einem Fahrzeug integriert und wird dazu verwendet, um festzustellen, ob sich ein Fahrzeug in einer beschatteten Parkposition befindet, oder ob das Fahrzeug einer direkten Sonneneinstrahlung ausgesetzt ist, nachdem das Fahrzeug geparkt hat, was zum Beispiel durch Geschwindigkeitssensoren, die Zündung und/oder Positionsdaten (z.B. GPS) des Fahrzeugs festgestellt wird. Ein Geschwindigkeitssensor oder eine GPS-Messung kann beispielsweise feststellen, ob das Fahrzeug in Ruhe ist.

Die Sensoreinrichtung 101 umfasst bei dem dargestellten Ausführungsbeispiel mindestens einen ersten Temperatursensor zum Bestimmen einer Außentemperatur und mindestens einen zweiten Temperatursensor zum Bestimmen einen Innenraumtemperatur eines Fahrzeugs.

Außentemperatursensoren sind serienmäßig in heutigen Fahrzeugen verbaut und können die Temperatur, die außerhalb des Fahrzeugs und in unmittelbarer Umgebung des Fahrzeugs herrscht, bestimmen. Innenraumtemperatursensoren ermitteln die Temperatur, die im Innenraum des Fahrzeugs vorherrscht, und sind zum Beispiel in Fahrzeugen mit einer geregelten Klimaanlage verbaut.

Aus der ermittelten Außentemperatur und der ermittelten Innenraumtemperatur wird durch die Auswerteeinrichtung 102 beispielsweise eine Temperaturdifferenz zwischen Außentemperatur und Innenraumtemperatur bestimmt. Liegt diese Temperaturdifferenz unterhalb eines definierten Schwellenwerts, wird festgestellt, dass sich das Fahrzeug in einer beschatteten Parkposition befindet. Der Schwellenwert für die Temperaturdifferenz kann dabei kleiner oder gleich 20 Kelvin sein, beispielsweise ≤15 K, ≤ 10 K, ≤ 8 K, ≤ 5 K, ≤ 3 K oder ≤ 1 K, wobei andere Werte ebenfalls möglich sind und diese Werte nur als Beispiel zu verstehen sind.

Wenn die Temperaturwerte des Außensensors und des Innenraumsensors ungefähr gleich sind, bzw. sich nur innerhalb eines vorgegebenen Temperaturwertes unterscheiden (d.h. die Differenz kleiner als der Schwellenwert ist), wird davon ausgegangen, dass sich das Fahrzeug in einer beschatteten Parkposition, das heißt auf einem Schattenparkplatz befindet.

Falls die Innenraumtemperatur des Fahrzeugs deutlich größer ist als die Außentemperatur, ist davon auszugehen, dass sich das Fahrzeug in der Sonne befindet. In anderen Worten kann davon ausgegangen werden, dass sich das Fahrzeug in der Sonne befindet, wenn die Temperaturdifferenz größer als ein weiterer Schwellenwert ist. Der weitere Schwellenwert kann gleich dem oben diskutierten Schwellenwert sein, es können jedoch auch verschiedene Schwellenwerte verwendet werden.

Allgemein werden die gewonnenen Informationen über den Beschattungsgrad umso genauer, je länger das Fahrzeug geparkt ist, da so Einflüsse der Innenraumtemperatur während der davorliegenden Fahrt abnehmen. Im Fall eines Schattenparkplatzes sollte sich dann beispielsweise die Innenraumtemperatur der Außenraumtemperatur annähern. Bei verschiedenen Ausführungsbeispielen lassen sich die obigen Schwellenwerte beispielsweise auch in Abhängigkeit der Standzeit definieren, beispielsweise ein größerer Schwellenwert für eine kürzere Standzeit des Fahrzeugs und ein kleinerer Schwellenwert für eine längere Standzeit, da sich nach der längeren Standzeit die Werte im Fall eines Schattenparkplatzes stärker angenähert haben sollten. Zudem kann zur Bestimmung des Beschattungsgrades auch die Vorgeschichte ausgewertet werden, beispielsweise wie lange das Fahrzeug davor gefahren ist und wie lange das Fahrzeug davor wo gestanden ist (beispielsweise auf einem besonnten Parkplatz oder einem beschatteten Parkplatz).

Zusätzlich oder alternativ zur Bestimmung des Beschattungsgrades (d.h. ob eine beschattete Parkposition oder eine besonnte Parkposition vorliegt) auf Basis der Temperaturdifferenz kann auch eine Änderung der Innenraumtemperatur über der Zeit und/oder eine Änderung der Außentemperatur über der Zeit ausgewertet werden. Beispielsweise kann bestimmt werden, dass eine besonnte Parkposition vorliegt, wenn die Innenraumtemperatur vergleichsweise stärker als die Außentemperatur steigt. Dies kann beispielsweise der Fall sein, wenn sich ein von der Nacht abgekühlter Wagen in der Sonne aufwärmt oder ein klimatisiertes Fahrzeug nach der Fahrt in der Sonne abgestellt wird. Es kann auch festgestellt werden, dass eine beschattete Parkposition vorliegt, wenn die Innenraumtemperatur in gleicher Weise (d.h. mit etwa gleichem Verlauf) gleichzeitig oder leicht verzögert im Vergleich zur Außentemperatur steigt, was z.B. nach einer kühlen Nacht der Fall sein kann. Hier erwärmt sich die Umgebungsluft und das Innere des Fahrzeugs durch den Anstieg der Temperatur bei Tagesanbruch im Schatten näherungsweise gleich, wobei sich eine Verzögerung durch die Isolation des Fahrzeugs ergeben kann. Typische Verzögerungswerte für derartige Fälle können beispielsweise experimentell für ein jeweiliges Fahrzeug bestimmt werden. Es kann auch festgestellt werden, dass es sich um eine beschattete Parkposition handelt, wenn die Innentemperatur nahezu konstant bleibt oder nur langsam fällt, (beispielsweise mit einer Rate kleiner als ein vorgegebener Ratenschwellenwert, welcher wiederum experimentell bestimmt werden kann). In diesem Zustand kann die Innentemperatur auch höher als die Außentemperatur sein, z.B. nach einer kurzen Fahrt von einem Sonnenparkplatz zu einem Schattenparkplatz, in der eine Klimaanlage das Fahrzeug beispielsweise noch nicht vollständig abgekühlt hat.

Die Messung und die Auswertung der Temperaturwerte geschieht wie oben erwähnt bevorzugt erst nach Ablauf einer gewissen Zeitspanne, nachdem das Fahrzeug geparkt wurde, damit beispielsweise der Wert für die Innenraumtemperatur nicht beispielsweise durch eine Klimaanlage verfälscht wird, da dann offensichtlich eine geringere Temperatur im Fahrzeug vorherrscht, die nicht der des parkenden Fahrzeugs entspricht. Die Messung und der Vergleich können auch wiederholt durchgeführt werden.

Darüber hinaus kann die Bestimmung der Temperaturdifferenz durch einen Abgleich mit Wetterdaten durch das Fahrzeug ergänzt werden. Die Wetterdaten geben darüber Aufschluss, ob an dem Tag überhaupt eine Sonneneinstrahlung vorherrscht und ein Vergleich der Temperaturwerte überhaupt sinnvoll ist. Mit Hilfe von Helligkeitssensoren kann beispielsweise der aktuell vorherrschende Sonnenstand bestimmt werden. Randbedingungen, wie beispielsweise schattenspendende Bäume oder Gebäude, sind auf einer Zeitskala von Wochen konstant.

Die Sensoreinrichtung 101 kann außerdem mindestens einen Helligkeitssensor umfassen. Mittels des Helligkeitssensors kann beispielsweise bestimmt werden, ob überhaupt die Sonne scheint (oder ob es z.B. Nacht ist, in diesem Fall ist eine Bestimmung des Beschattungsgrades nicht sinnvoll). Zudem kann mit dem Helligkeitssensor beispielsweise festgestellt werden, ob Scheiben des Fahrzeugs bedeckt sind. Beispielsweise wird beim Abstellen eine Frontscheibe des Fahrzeugs manchmal von einem Fahrer oder einer anderen Person mit einer reflektierenden Isolierfolie abgedeckt, um ein Aufheizen des Fahrzeugs zu verringern. Eine derartige Folie führt zu einer verringerten Innenraumhelligkeit, was durch den Helligkeitssensor erfasst werden kann. In diesem Fall kann die Tatsache, dass sich das Fahrzeug langsamer erwärmt, bei der Auswertung berücksichtigt werden.

Auch weitere Umstände können bei der Ermittlung des Beschattungsgrades verwendet werden. Beispielsweise kann bei der Auswertung auch eine Taqes- und Jahreszeit berücksichtigt werden. Die Tageszeit hat beispielsweise einen Einfluss auf den Sonnenstand. So kann z.B. ein Parkplatz am Vormittag ein Sonnenparkplatz und am Nachmittag ein Schattenparkplatz sein. Die Jahreszeit hat beispielsweise einen Einfluss auf einen Belaubungszustand von Bäumen oder anderen Pflanzen. Somit kann ein Parkplatz im Sommer ein Schattenparkplatz sein und im Herbst oder Winter ein Sonnenparkplatz.

Zudem kann aus ausgewertet werden, ob Fenster, Türen oder Klappen (beispielsweise Heckklappen) zeitweilig oder dauerhaft geöffnet sind. Hierfür sind in Fahrzeugen häufig ohnehin Sensoren vorhanden. Ein derartiges Öffnen von Klappen, Türen oder Fenstern kann einen Einfluss auf die Innenraumtemperatur haben, diese insbesondere absenken. Beispielsweise ist ein Aufheizen in einer besonnten Parkposition bei geöffneten Fenstern üblicherweise geringer als bei geschlossenen Fenstern. Derartige Effekte können somit ebenfalls bei der Auswertung berücksichtigt werden.

Auch kann bei manchen Ausführungsbeispielen eine Ausrichtung des Fahrzeugs zum Sonnenstand ausgewertet werden, beispielsweise durch Auslesen eines in einem Navigationssystem verbauten Kompasses und Berücksichtigen des tageszeitabhängigen Sonnenstandes. Beispielsweise heizen sich Fahrzeuge schneller auf, wenn die Frontscheibe genau in Richtung der Sonneneinstrahlung gerichtet ist. Solche Effekte können somit ebenfalls berücksichtigt werden.

Über die, in der Vorrichtung integrierten Ausgabeeinrichtung 103 können dem Fahrer des Fahrzeugs sowohl die Temperaturwerte angezeigt werden, als auch die daraus ermittelte Tatsache, dass sich das Fahrzeug in einer beschatteten Parkposition befindet.

Die Ausgabeeinrichtung 103 kann dem Fahrer die oben genannten Informationen auch akustisch ausgeben.

Die in der Vorrichtung 109 integrierte Sendeeinrichtung 104 übermittelt, beispielsweise drahtlos, die oben genannten Informationen an eine Verarbeitungseinrichtung 110, zum Beispiel einen Server. Die in der Vorrichtung 109 integrierte Empfangseinrichtung 105 kann ebenso Daten, beispielsweise drahtlos, der Verarbeitungseinrichtung 110 empfangen und diese beispielsweise an die Auswerteeinrichtung 102 und/oder die Ausgabeeinrichtung 103 weitergeben.

Zusammen mit den Daten über den Beschattungsgrad wird bevorzugt eine Information über die Position des geparkten Fahrzeugs (und damit die Position des Parkplatzes) übermittelt. Eine derartige Position kann beispielsweise durch eine ohnehin in dem Fahrzeug befindliche Positionsbestimmung, beispielsweise einen GPS-Empfänger, ermittelt werden. Zusätzlich oder alternativ kann auch eine visuelle Lokalisierung beispielsweise über im Fahrzeug eingebaute Kameras erfolgen. Derartige Kameras können beispielsweise Straßenschilder oder ähnliche Informationen erfassen, welche auf die Position des Parkplatzes schließen lassen. Bei anderen Ausführungsbeispielen kann die Position des Parkplatzes zudem oder alternativ auch manuell eingegeben werden.

Die Daten des Fahrzeugs können dabei über ein Notrufsystem, eine sogenannten E-Call-Einheit, an ein Backend übertragen werden. Dabei kann das Backend eine Art Serversystem sein, das Daten außerhalb des Fahrzeugs beispielsweise drahtlos senden und/oder empfangen kann. Eine drahtlose Übertragung, wie beispielsweise WLAN, ist ebenfalls möglich.

Die Verarbeitungseinrichtung 110 umfasst eine Sendeeinrichtung 106 und eine Empfangseinrichtung 107.

Die Empfangseinrichtung 107 empfängt dabei Informationen über Beschattungsgrade von mehreren entsprechend eingerichteten Fahrzeugen gleichzeitig oder hintereinander.

Die Verarbeitungseinrichtung 110 umfasst außerdem einen Datenspeicher 108, zum Speichern von Daten auf Basis der empfangenen Informationen. Die Sendeeinrichtung 106 sendet dabei Informationen über einen Beschattungsgrad der Parkposition in Antwort auf die Anforderung auf Basis der gespeicherten Daten an das Fahrzeug.

Die in einem Fahrzeug integrierte Vorrichtung 109 kann Daten von der Verarbeitungseinrichtung 110 empfangen. Die Vorrichtung 109 kann beispielsweise eine Anfrage über eine beschattete Parkposition mittels der Sendeeinrichtung 104 an die Verarbeitungseinrichtung 110 senden und von dieser dann eine Antwort erhalten, zum Beispiel wo sich in der näheren Umgebung des Fahrzeugs ein Schattenparkplatz oder Sonnenparkplatz befindet. Mit dieser Information kann dann der Fahrer des Fahrzeugs den entsprechenden beschatteten Parkplatz ansteuern und sein Fahrzeug dort parken.

Die Sendeeinrichtung 106 sendet Daten von der Verarbeitungseinrichtung 110 an ein Fahrzeug oder an eine Vielzahl von Fahrzeugen. Zum Beispiel kann eine gesamte Karte mit beschatteten Parkplätzen, beispielsweise einer Stadt, einem Fahrer so Online zur Verfügung gestellt werden.

Über die Sendeeinrichtung 106 können beispielsweise auch aktuelle Wetterdaten an ein oder mehrere Fahrzeuge gesendet werden.

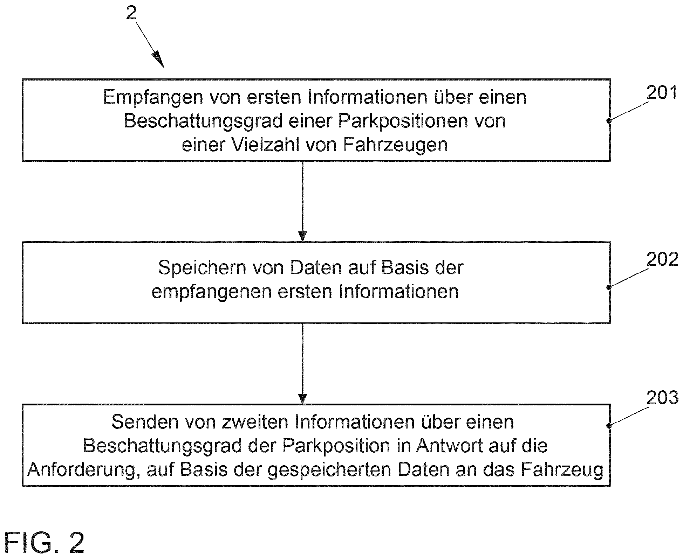

FIG. 2 zeigt Verfahrensschritte 201-203 eines Verfahrens 2, welches beispielsweise von der Verarbeitungseinrichtung 110, gemäß FIG. 1, ausgeführt werden kann, aber nicht darauf beschränkt ist.

Im Schritt 201 des Verfahrens 2, gemäß FIG. 2, werden erste Informationen über Beschattungsgrade von Parkpositionen von einer Vielzahl von Fahrzeugen empfangen.

Im Schritt 202 des Verfahrens, gemäß FIG. 2, werden Daten auf Basis der empfangenen ersten Informationen gespeichert.

Im Schritt 203 des Verfahrens, gemäß FIG. 2, werden zweite Informationen über einen Beschattungsgrad einer Parkposition in Antwort auf die Anforderung auf Basis der gespeicherten Daten an das Fahrzeug gesendet.

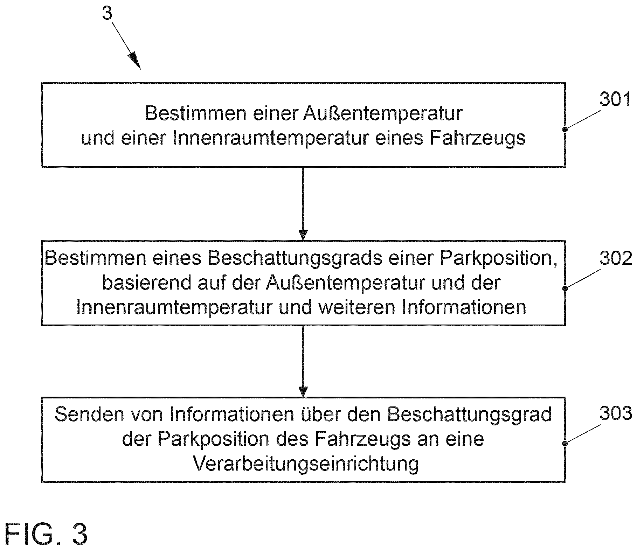

FIG. 3 zeigt Verfahrensschritte 301-303 eines Verfahrens 3, welches beispielsweise von der Vorrichtung 109, gemäß FIG. 1, ausgeführt werden kann, aber nicht darauf beschränkt ist.

Im Schritt 301 des Verfahrens 3, gemäß FIG. 3, wird eine Außentemperatur und eine Innenraumtemperatur eines Fahrzeugs bestimmt.

Im Schritt 302 des Verfahrens 3, gemäß FIG. 3, wird ein Beschattungsgrad einer Parkposition des Fahrzeugs basierend auf der Außentemperatur und der Innenraumtemperatur des Fahrzeugs bestimmt. Diese Bestimmung kann beispielsweise wie oben für die entsprechende Vorrichtung erläutert durchgeführt werden.

Im Schritt 303 des Verfahrens 3, gemäß FIG. 3, werden Informationen über den Beschattungsgrad der Parkposition des Fahrzeugs an eine Verarbeitungseinrichtung gesendet.

Die erfindungsgemäße Vorrichtung und das nicht erfindungsgemäße Verfahren können bereits in allen Fahrzeugen, die über eine geregelte Klimaanlage verfügen integriert und ausgeführt werden, da diese über Innenraumtemperatursensoren verfügen. In anderen Fällen können speziell für die Implementierung der Vorrichtungen und Verfahren bereitgestellte Sensoren verwendet werden. Außentemperatursensoren sind standardmäßig in nahezu jedem Fahrzeug verbaut.

### Bezugszeichenliste

- 101: Sensoreinrichtung
- 102: Auswerteeinrichtung
- 103: Ausgabeeinrichtung
- 104: Sendeeinrichtung
- 105: Empfangseinrichtung
- 106: Sendeeinrichtung
- 107: Empfangseinrichtung
- 108: Datenspeicher
- 109: Vorrichtung
- 110: Verarbeitungseinrichtung
- 2: Verfahren
- 201-203: Verfahrensschritte
- 3: Verfahren
- 301-303: Verfahrensschritte

## Patentansprüche

1. Vorrichtung (109) zum Bestimmen eines Beschattungsgrads einer Parkposition für ein Fahrzeug, umfassend:
- eine Sensoreinrichtung (101), wobei die Sensoreinrichtung eingerichtet ist, eine Außentemperatur und eine Innenraumtemperatur des Fahrzeugs zu bestimmen,
**dadurch gekennzeichnet, dass** die Vorrichtung (109) weiter umfasst:
- eine Auswerteeinrichtung (102), wobei die Auswerteeinrichtung (102) eingerichtet ist, einen Beschattungsgrad der Parkposition des Fahrzeugs basierend auf der Außentemperatur und der Innenraumtemperatur zu bestimmen,
- eine Sendeeinrichtung (104), wobei die Sendeeinrichtung (104) eingerichtet ist, Informationen über den Beschattungsgrad der Parkposition des Fahrzeugs an eine Verarbeitungseinrichtung (110) außerhalb des Fahrzeugs zu senden,
- eine Empfangseinrichtung (105), wobei die Empfangseinrichtung (105) eingerichtet ist, Informationen über einen weiteren Beschattungsgrad einer weiteren Parkposition von der Verarbeitungseinrichtung (110) zu empfangen, und
- eine Ausgabeeinrichtung (103), wobei die Ausgabeeinrichtung (103) eingerichtet ist, Informationen über den weiteren Beschattungsgrad der weiteren Parkposition an einen Fahrer des Fahrzeugs auszugeben,
wobei die Sensoreinrichtung (101) weiter eingerichtet ist, festzustellen, ob eine Tür und/oder ein Fenster und/oder eine Klappe des Fahrzeugs geöffnet oder geschlossen ist, und wobei die Auswerteeinrichtung (102) weiter eingerichtet ist, den Beschattungsgrad der Parkposition in Abhängigkeit davon ob eine Tür und/oder ein Fenster und/oder eine Klappe des Fahrzeugs geöffnet oder geschlossen ist zu bestimmen.

2. Vorrichtung (109) nach Anspruch 1, wobei die Auswerteeinrichtung (102) eingerichtet ist, eine Temperaturdifferenz zwischen Außentemperatur und Innenraumtemperatur zu bestimmen, und den Beschattungsgrad in Abhängigkeit von einem Vergleich der Temperaturdifferenz mit mindestens einem Schwellenwert zu bestimmen.

3. Vorrichtung (109) nach Anspruch 1 oder Anspruch 2, wobei die Auswerteeinrichtung (102) eingerichtet ist, den Beschattungsgrad basierend auf einer Änderung der Innentemperatur über die Zeit und/oder basierend auf einer Änderung der Außentemperatur über die Zeit zu bestimmen.

4. Vorrichtung nach Anspruch 2 oder 3, wobei die Auswerteeinrichtung (102) eingerichtet ist, als Beschattungsgrad zu bestimmen, dass sich das Fahrzeug in einer beschatteten Parkposition befindet, wenn
- die Temperaturdifferenz kleiner als ein erster Schwellenwert des mindestens einen Schwellenwerts ist, und/oder
- die Innenraumtemperatur in gleicher Weise wie die Außentemperatur steigt und/oder
- die Innenraumtemperatur verglichen mit der Außentemperatur mit einer Verzögerung kleiner als ein Verzögerungsschwellenwert steigt, und/oder
- die Innenraumtemperatur näherungsweise konstant bleibt oder mit einer Rate kleiner als einem Ratenschwellenwert fällt, und/oder wobei die Auswerteeinrichtung (102) eingerichtet ist, als Beschattungsgrad festzustellen, dass sich das Fahrzeug in einer sonnigen Parkposition befindet
- wenn die Temperaturdifferenz größer als ein zweiter Schwellenwert des mindestens einen Schwellenwertes ist, und/oder
- die Innenraumtemperatur stärker über der Zeit ansteigt als die Außentemperatur.

5. Vorrichtung (109) nach einem der Ansprüche 1-4, wobei die Sensoreinrichtung (101) einen Helligkeitssensor umfasst, wobei die Auswerteeinrichtung (102) eingerichtet ist, den Beschattungsgrad der Parkposition in Abhängigkeit von einem Helligkeitswert des Helligkeitssensors zu bestimmen.

6. Vorrichtung (109) nach einem der Ansprüche 1-5, wobei die Auswerteeinrichtung (102) eingerichtet ist, zu bestimmen, ob sich das Fahrzeug in einem geparkten Zustand befindet, und nur dann den Beschattungsgrad zu bestimmen, wenn sich das Fahrzeug in einem geparkten Zustand befindet.

7. Vorrichtung (109) nach einem der Ansprüche 1 - 6, wobei die Auswerteeinrichtung (102) eingerichtet ist, Informationen über den Beschattungsgrad der Parkposition mit Wetterdaten abzugleichen.

8. Vorrichtung (109) nach einem der Ansprüche 1 - 7, wobei die Auswerteeinrichtung (102) eingerichtet ist, einen Ort der Parkposition zu bestimmen, wobei die Sendeeinrichtung (104) eingerichtet ist, den Ort der Parkposition an die Verarbeitungseinrichtung (110) zu senden.

9. Vorrichtung (109) nach einem der Ansprüche 1 - 8, wobei die Auswerteeinrichtung (102) eingerichtet ist, Informationen über den Beschattungsgrad der Parkposition mit einer zeitlichen Information abzugleichen, wobei die zeitliche Information eine Tageszeit und/oder eine Jahreszeit umfasst.

10. Vorrichtung (109) nach einem der Ansprüche 1 - 9, wobei die Auswerteeinrichtung (102) eingerichtet ist, den Beschattungsgrad der Parkposition in Abhängigkeit von einer Ausrichtung des Fahrzeugs in der Parkposition zu einem Sonnenstand zu bestimmen.

11. Vorrichtung (109) nach einem der Ansprüche 1 - 10, wobei die Auswerteeinrichtung (102) eingerichtet ist, den Beschattungsgrad nach einer vorgegebenen Mindestparkzeit und/oder wiederholt zu bestimmen.

## Claims

1. Apparatus (109) for determining a degree of shading of a parking position for a vehicle, comprising:
- a sensor device (101), wherein the sensor device is set up to determine an outside temperature and an inside temperature of the vehicle,
**characterized in that** the apparatus (109) also comprises:
- an evaluation device (102), wherein the evaluation device (102) is set up to determine a degree of shading of the parking position of the vehicle on the basis of the outside temperature and the inside temperature,
- a transmitting device (104), wherein the transmitting device (104) is set up to transmit information relating to the degree of shading of the parking position of the vehicle to a processing device (110) outside the vehicle,
- a receiving device (105), wherein the receiving device (105) is set up to receive information relating to a further degree of shading of a further parking position from the processing device (110), and
- an output device (103), wherein the output device (103) is set up to output information relating to the further degree of shading of the further parking position to a driver of the vehicle,
wherein the sensor device (101) is also set up to determine whether a door and/or a window and/or a tailgate of the vehicle is/are open or closed, and wherein the evaluation device (102) is also set up to determine the degree of shading of the parking position on the basis of whether a door and/or a window and/or tailgate of the vehicle is/are open or closed.

2. Apparatus (109) according to Claim 1, wherein the evaluation device (102) is set up to determine a temperature difference between the outside temperature and the inside temperature and to determine the degree of shading on the basis of a comparison of the temperature difference with at least one threshold value.

3. Apparatus (109) according to Claim 1 or Claim 2, wherein the evaluation device (102) is set up to determine the degree of shading on the basis of a change in the inside temperature over time and/or on the basis of a change in the outside temperature over time.

4. Apparatus according to Claim 2 or 3, wherein the evaluation device (102) is set up to determine, as the degree of shading, that the vehicle is in a shaded parking position if
- the temperature difference is less than a first threshold value of the at least one threshold value, and/or
- the inside temperature increases in the same manner as the outside temperature, and/or
- the inside temperature increases, in comparison with the outside temperature, with a delay which is less than a delay threshold value, and/or
- the inside temperature remains approximately constant or falls at a rate which is less than a rate threshold value, and/or wherein the evaluation device (102) is set up to determine, as the degree of shading, that the vehicle is in a sunny parking position
- if the temperature difference is greater than a second threshold value of the at least one threshold value, and/or
- the inside temperature increases more greatly over time than the outside temperature.

5. Apparatus (109) according to one of Claims 1-4, wherein the sensor device (101) comprises a brightness sensor, wherein the evaluation device (102) is set up to determine the degree of shading of the parking position on the basis of a brightness value of the brightness sensor.

6. Apparatus (109) according to one of Claims 1-5, wherein the evaluation device (102) is set up to determine whether the vehicle is in a parked state and to determine the degree of shading only when the vehicle is in a parked state.

7. Apparatus (109) according to one of Claims 1-6, wherein the evaluation device (102) is set up to compare information relating to the degree of shading of the parking position with weather data.

8. Apparatus (109) according to one of Claims 1-7, wherein the evaluation device (102) is set up to determine a location of the parking position, wherein the transmitting device (104) is set up to transmit the location of the parking position to the processing device (110) .

9. Apparatus (109) according to one of Claims 1-8, wherein the evaluation device (102) is set up to compare information relating to the degree of shading of the parking position with an item of temporal information, wherein the temporal information comprises a time of day and/or a season.

10. Apparatus (109) according to one of Claims 1-9, wherein the evaluation device (102) is set up to determine the degree of shading of the parking position on the basis of an orientation of the vehicle in the parking position with respect to a position of the sun.

11. Apparatus (109) according to one of Claims 1-10, wherein the evaluation device (102) is set up to determine the degree of shading after a predefined minimum parking time and/or repeatedly.

## Revendications

1. Dispositif (109) destiné à déterminer un taux d'ombrage d'une position de parking pour un véhicule, comprenant :
- un système de capteur (101), le système de capteur étant aménagé pour déterminer une température extérieure et une température interne du véhicule, **caractérisé en ce que** le dispositif (109) comprend en outre :
- un système d'évaluation (102), le système d'évaluation (102) étant aménagé pour déterminer un taux d'ombrage de la position de parking du véhicule, sur la base de la température extérieure et de la température interne,
- un système émetteur (104), le système émetteur (104) étant aménagé pour émettre des informations sur le taux d'ombrage de la position de parking du véhicule à l'attention d'un système de traitement (110) à l'extérieur du véhicule,
- un système récepteur (105), le système récepteur (105) étant aménagé pour réceptionner des informations sur un autre taux d'ombrage d'une autre position de parking de la part du système de traitement (110), et
- un système de signalisation (103), le système de signalisation (103) étant aménagé pour signaler des informations sur l'autre taux d'ombrage de l'autre position de parking à un conducteur du véhicule,
le système de capteur (101) étant aménagé par ailleurs pour constater si une portière et/ou une fenêtre et/ou un hayon du véhicule est ouvert(e) ou fermé(e) et le système d'évaluation (102) étant aménagé en outre pour déterminer le taux d'ombrage de la position de parking en fonction du fait si une portière et/ou une fenêtre et/ou un hayon du véhicule est ouvert(e) ou fermé(e).

2. Dispositif (109) selon la revendication 1, le système d'évaluation (102) étant aménagé pour déterminer une différence de température entre la température extérieure et la température interne et pour déterminer le taux d'ombrage en fonction d'une comparaison de la différence de température avec au moins une valeur seuil.

3. Dispositif (109) selon la revendication 1 ou la revendication 2, le système d'évaluation (102) étant aménagé pour déterminer le taux d'ombrage sur la base d'une modification de la température intérieure dans le temps et/ou sur la base d'une modification de la température extérieure dans le temps.

4. Dispositif selon la revendication 2 ou 3, le système d'évaluation (102) étant aménagé pour déterminer en tant que taux d'ombrage que le véhicule se trouve sur une position de parking ombragée lorsque
- la différence de température est inférieure à une première valeur seuil de l'au moins une valeur seuil, et/ou
- la température interne monte de la même manière que la température extérieure et/ou
- la température interne comparée avec la température extérieure monte avec une temporisation qui est inférieure à une valeur seuil de temporisation, et/ou
- la température interne reste approximativement constante ou baisse à un taux qui est inférieur à une valeur seuil pour le taux, et/ou le système d'évaluation (102) étant aménagé pour constater en tant que taux d'ombrage que le véhicule se trouve dans une position de parking ensoleillée
- lorsque la différence de température est supérieure à une deuxième valeur seuil de l'au moins une valeur seuil, et/ou
- la température interne monte plus fortement dans le temps que la température extérieure.

5. Dispositif (109) selon l'une quelconque des revendications 1 à 4, le système de capteur (101) comprenant un capteur de luminosité, le système d'évaluation (102) étant aménagé pour déterminer le taux d'ombrage de la position de parking en fonction d'une valeur de luminosité du capteur de luminosité.

6. Dispositif (109) selon l'une quelconque des revendications 1 à 5, le système d'évaluation (102) étant aménagé pour déterminer si le véhicule se trouve dans un état de stationnement et pour déterminer le taux d'ombrage uniquement si le véhicule se trouve dans un état de stationnement.

7. Dispositif (109) selon l'une quelconque des revendications 1 à 6, le système d'évaluation (102) étant aménagé pour ajuster des informations sur le taux d'ombrage de la position de parking avec des données météorologiques.

8. Dispositif (109) selon l'une quelconque des revendications 1 à 7, le système d'évaluation (102) étant aménagé pour déterminer un lieu pour la position de parking, le système émetteur (104) étant aménagé pour envoyer le lieu de la position de parking au système de traitement (110).

9. Dispositif (109) selon l'une quelconque des revendications 1 à 8, le système d'évaluation (102) étant aménagé pour adjuster des informations sur le taux d'ombrage de la position de parking avec une information temporelle, l'information temporelle comprenant une heure dans la journée et/ou une saison.

10. Dispositif (109) selon l'une quelconque des revendications 1 à 9, le système d'évaluation (102) étant aménagé pour déterminer le taux d'ombrage de la position de parking en fonction d'une orientation du véhicule dans la position de parking par rapport à une position du soleil.

11. Dispositif (109) selon l'une quelconque des revendications 1 à 10, le système d'évaluation (102) étant aménagé pour déterminer le taux d'ombrage après un temps de stationnement minimum prédéfini et/ou de manière réitérée.
